Europäisches Patentamt

European Patent Office

Office européen des brevets

(11) Veröffentlichungsnummer: **0 330 949**
**A2**

## EUROPÄISCHE PATENTANMELDUNG

(21) Anmeldenummer: 89102870.6

(22) Anmeldetag: 20.02.89

(51) Int. Cl.⁴: **B23B 27/00**

(30) Priorität: 24.02.88 DE 3805725

(43) Veröffentlichungstag der Anmeldung:
06.09.89 Patentblatt 89/36

(84) Benannte Vertragsstaaten:
AT DE ES FR GB IT SE

(71) Anmelder: H. WILLY KRAUSS GMBH & CO.
METALLWAREN- UND WERKZEUGFABRIK
Kelheimer Strasse 33
D-8432 Beilngries(DE)

(72) Erfinder: Krauss, Helmut, Dipl.-Ing.
Bartningallee 26
D-1000 Berlin-21(DE)

(74) Vertreter: LOUIS, PÖHLAU, LOHRENTZ &
SEGETH
Kesslerplatz 1 Postfach 3055
D-8500 Nürnberg(DE)

(54) Schneidwerkzeug zum konturengenauen Aussen- oder Innen-Einstechdrehen.

(57) Es wird ein Schneidwerkzeug (10) zum konturengenauen Aussen- oder Innen-Einstechdrehen beschrieben, das eine Schneidkante (12), eine sich an die Schneidkante (12) anschliessende Spanfläche (14) und eine sich an die Spanfläche (14) anschliessende Spanablauffläche (16) aufweist. Um den Spanabfluss von der Schneidkante (12) über die Spanfläche (14) und die Spanablauffläche (16) hinweg zu verbessern, und um in radialer Richtung wirksam werdende Kräfte, die bei einer Überhöhung bzw. bei einer Absenkung der Schneidkante (12) relativ zur Mittelebene des zu bearbeitenden Werkstückes während des Einstechdrehvorgangs auftreten, zu verhindern, ist die Spanfläche (14) von der Schneidkante (12) ausgehend zur Spanablauffläche (16) hin konkav gekrümmt ausgebildet.

FIG.2

# Schneidwerkzeug zum konturengenauen Aussen- oder Innen-Einstechdrehen

Die Erfindung betrifft ein Schneidwerkzeug zum konturengenauen Aussen- oder Innen-Einstechdrehen eines rotierenden Werkstücks, mit einer Schneidkante, deren Kontur in Längsrichtung des Schneidwerkzeugs dem gewünschten axialen Profil des Werkstücks entspricht, und mit einer an die Schneidkante anschliessenden, mit einer durch die Schneidkante velaufenden Bezugsebene einen Spanwinkel einschliessenden Spanfläche, an die sich eine Spanablauffläche anschliesst.

Ein derartiges Schneidwerkzeug ist bspw. in der DE 36 12 180 A1 beschrieben. Bei diesem Schneidwerkzeug ändert sich entweder der Spanwinkel in Längsrichtung der Schneidkante, oder die Schneidkante ist in Bezug zur Drehachse des zu bearbeitenden Werkstückes geneigt. Ausserdem wird dort vorgeschlagen, den Spanwinkel vom jeweiligen Radius des Profils des zu bearbeitenden Werkstücks abhängig auszubilden. Bei diesem bekannten Schneidwerkzeug und bei den ansonsten bekannten Schneidwerkzeugen zum Einstechdrehen ist sowohl die Spanfläche als auch die Spanablauffläche ebenflächig ausgebildet und nur der Übergangsabschnitt zwischen der Spanfläche und der Spanablauffläche mit einer Krümmung versehen. Durch die ebenflächige Ausbildung der Spanfläche und der Spanablauffläche kann der Spanabfluss vom Schneidwerkzeug weg noch Probleme aufwerfen.

Deshalb liegt der Erfindung die Aufgabe zugrunde, ein Schneidwerkzeug der eingangs genannten Art zu schaffen, bei dem der Spanabfluss weiter verbessert ist.

Diese Aufgabe wird erfindungsgemäss dadurch gelöst, dass die Spanfläche von der Schneidkante ausgehend zur Spanablauffläche hin konkav ausgebildet ist, so dass die in einer jeden zur Längsachse des Schneidwerkzeugs senkrecht stehenden Radialebene liegenden, die Spanfläche berührenden Tangenten mit der Schnittgeraden, entlang der sich die entsprechende Radialebene mit der Bezugsebene schneidet, in radialer Richtung einen sich ändernden Winkel einschliessen. Dabei kann sich der Winkel der Tangenten der Spanfläche relativ zur entsprechenden Schnittgeraden in radialer Richtung der Spanfläche von der Schneidkante zur Spanablauffläche kontinuierlich ändern. Eine derartige kontinuierliche Änderung des Tangentenwinkels relativ zur in der entsprechenden Radialebene liegenden Schnittgeraden ist sowohl möglich, wenn sich die Krümmung der Spanfläche zur Spanablauffläche hin ändert, oder wenn die Krümmung der Spanfläche zwischen der Schneidkante und der Spanablauffläche mindestens annähernd konstant ist. Selbstverständlich ist es auch möglich, dass sich die Spanfläche aus einem relativ schmalen ebenflächigen Abschnitt und aus einem sich an den ebenflächigen Abschnitt anschliessenden gekrümmten Abschnitt zusammensetzt, wobei der ebenflächige Abschnitt von der Schneidkante ausgeht und wobei sich der gekrümmte Abschnitt an die Spanablauffläche anschliesst.

Mit dem erfindungsgemäss ausgebildeten Schneidwerkzeug wird nicht nur der Vorteil erzielt, dass der Spanabfluss vom Schneidwerkzeug weg vergleichsweise gut ist, sondern dass auch die Kraftwirkungen auf das Schneidwerkzeug während des Kontureinstechdrehens vergleichsweise verbessert sind, weil sich durch die nicht ebenflächige Ausbildung der Spanfläche im Vergleich zu einer ebenflächigen Ausbildung derselben bei jedem Radius der Kontur, der kleiner als der maximale Konturradius ist, eine Erhöhung der Spanfläche gegenüber einer ebenflächigen Spanfläche ergibt. Durch diese Erhöhung, d.h. Annäherung an die durch die Schneidkante verlaufende Bezugsebene ergibt sich eine Reduktion der Kräfte, die das Schneidwerkzeug in das zu bearbeitende Werkstück hineinziehen, bzw. die das Schneidwerkzeug aus dem zu bearbeitenden Werkstück herauszwängen. Derartige Kräfte treten immer dann auf, wenn ein entsprechender Abschnitt der Schneidkante des Schneidwerkzeugs über oder unter der Mittelebene des Werkstücks liegt. Handelt es sich bei dem Werkstück um ein innen zu bearbeitendes Werkstück, so werden Abschnitte der Schneidkante, die sich über der Mittelachse befinden, während des Schneidarbeitsgangs in das Werkstück hineingezogen, während Abschnitte der Schneidkante, die sich unterhalb dieser Mittelebene befinden, aus dem Werkstück herausgezwängt werden.

Umgekehrt liegen die Verhältnisse beim Aussen-Einstechdrehen, dort werden Abschnitte der Schneidkante, die sich über der Mittelebene befinden, während des Schneidarbeitsgangs aus dem Werkstück herausgezwängt, während Abschnitte der Schneidkante, die sich unterhalb der Mittelebene des Werkstücks befinden, in das Werkstück hineingezwängt werden. Infolge der gekrümmten Ausbildung der Spanfläche ergibt sich im Vergleich zu ebenflächigen Spanflächen der bekannten Schneidwerkzeuge der gattungsgemässen Art eine Verbesserung der Angleichung an die Bezugsebene und somit eine Eliminierung der das Schneidwerkzeug in das Werkstück hineinzwängenden und der das Schneidwerkzeug aus dem zu bearbeitenden Werkstück herausdrückenden aussermittigen Kräfte auf unterschiedlichen radialen Abständen der Kontur des Schneidwerkzeugs

Weitere Einzelheiten, Merkmale und Vorteile ergeben sich aus der nachfolgenden Beschreibung eines in der Zeichnung in einem vergrösserten Maßstab dargestellten Ausführungsbeispieles des erfindungsgemässen Schneidwerkzeugs, bei dem es sich um ein Schneidwerkzeug zum konturengenauen Aussen-Einstechdrehen handelt. Bei diesem Schneidwerkzeug kann es sich selbstverständlich auch um ein Schneidwerkzeug zum konturengenauen Innen-Einstechdrehen handeln. Es zeigt:

Figur 1 eine Ansicht eines Schneidwerkzeugs zum konturengenauen Einstechdrehen in einer Ansicht von oben, wobei der Befestigungsschaft des Schneidwerkzeugs nur abschnittweise dargestellt ist,

Figur 2 einen Schnitt durch das Schneidwerkzeug gemäss Figur 1 in Richtung der Schnittlinie II-II, d.h. entlang einer radialen Ebene des Schneidwerkzeugs, und

Figur 3 einen stark vergrösserten Abschnitt des Schneidwerkzeugs im Bereich seiner Schneidkante.

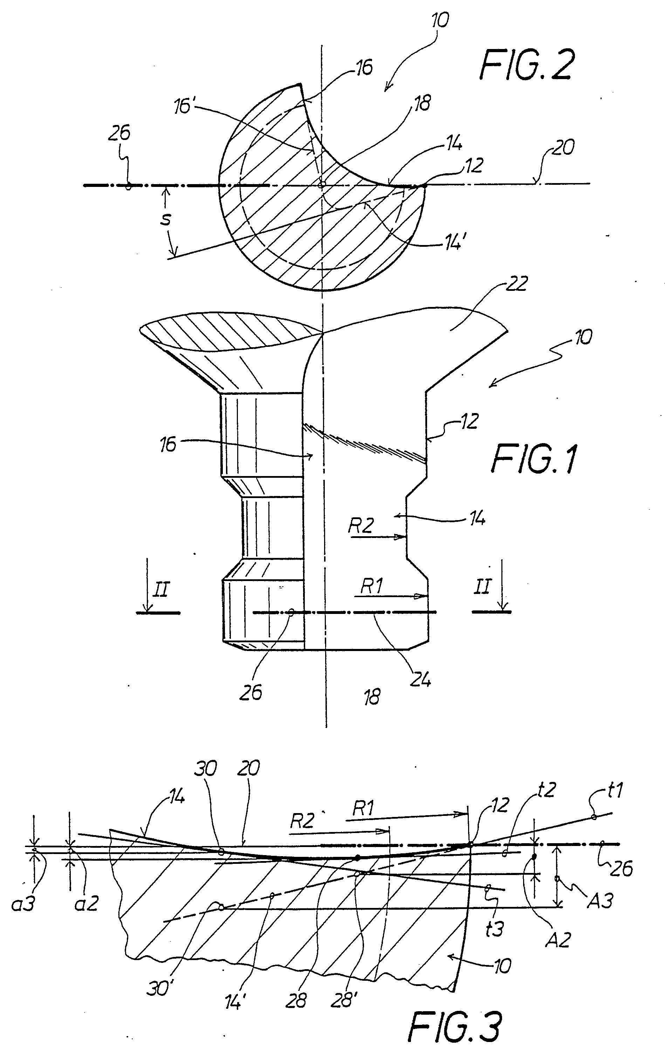

Die Figuren 1 und 2 zeigen ein Schneidwerkzeug 10 zum konturengenauen Einstechdrehen, das mit einer Schneidkante 12 versehen ist, deren Kontur dem gewünschten Profil eines durch Einstechdrehen zu bearbeitenden Werkstücks entspricht. Von der Schneidkante 12 geht eine Spanfläche 14 aus, an die sich eine von der Schneidkante 12 abgewandte Spanablauffläche 16 anschliesst. In Figur 2 ist mit strichlierten dünnen Linien auch eine Spanfläche 14′ und eine Spanablauffläche 16′ angedeutet, wie sie bislang bei derartigen Schneidwerkzeugen ebenflächig ausgebildet sind. Durch die Schneidkante 12 und durch die Längsachse 18 des Schneidwerkzeugs 10 hindurch erstreckt sich eine Bezugsebene 20, die in Figur 1 in der Zeichnungsebene liegt, und die in Figur 2 zur Zeichnungsebene senkrecht steht. An der Schneidkante 12 schliesst die Spanfläche 14 mit der Bezugsebene 20 einen Spanwinkel s ein. Bei bekannten Schneidwerkzeugen mit einer ebenflächigen Spanfläche 14′ ist der Spanwinkel unabhängig vom radialen Abstand des jeweiligen Abschnittes der Schneidkante 12 von der Längsachse 18 konstant, demgegenüber ändert sich der Spanwinkel der Spanfläche 14 bei dem in den Figuren dargestellten Schneidwerkzeug 10 infolge der Tatsache, dass die Spanfläche 14 von der Schneidkante 12 ausgehend zur Spanablauffläche 16 hin konkav gekrümmt ausgebildet ist, wie aus Figur 2 ersichtlich ist. In Figur 2 ist ein Schneidwerkzeug angedeutet, bei dem die Krümmung der Spanfläche 14 konstant ist. Selbstverständlich wäre es auch möglich, die Krümmung der Spanfläche von der Schneidkante 12 zur Spanablauffläche 16 hin nicht konstant sondern ab- bzw. zunehmend auszubilden. In Figur 1 ist mit der Bezugsziffer 22 ein abschnittweise dargestellter Schaft des Schneidwerkzeuges 10 bezeichnet. Mit diesem Schaft 22 wird das Kontureinstechschneidwerkzeug 10 an einem geeigneten Werkzeughalter befestigt.

Durch die nicht ebenflächige sondern gekrümmte Ausbildung der Spanfläche 14 ergibt sich ein guter Spanabfluss, der während eines Dreharbeitsgangs von einem (nicht dargestellten) Werkstück durch die Schneidkante 12 abgenommenen Späne über die Spanfläche 14 und die Spanablauffläche 16 hinweg. Dabei handelt es sich in aller Regel um einen Spanabfluss in radialer Richtung, d.h. um einen Spanabfluss parallel zu den Radialebenen, von denen in Figur 1 eine Radialebene 24 bezeichnet ist, die zur Zeichnungsebene der Figur 1 senkrecht ausgerichtet ist, und die in der Zeichnungsebene der Figur 2 liegt. Diese Radialebene 24 schneidet sich mit der Bezugsebene 20 in einer Schnittgeraden 26, die sowohl in Figur 1 als auch in Figur 2 durch eine strichpunktierte Linie angedeutet ist.

In Figur 3 ist ein Abschnitt des Schneidwerkzeuges 10 in einem stark vergrösserten Maßstab dargestellt. Die Schneidkante 12 weist eine dem gewünschten axialen Profil des (nicht dargestellten) Werkstücks entsprechende Kontur auf, so dass Abschnitte der Schneidkante 12 auf einem Radius R1 und andere Abschnitte der Schneidkante 12 auf einem Radius R2 liegen können, wie auch aus Figur 1 ersichtlich ist. Selbstverständlich kann die Schneidkante 12 auch beliebig anders ausgebildet sein. Die Gestalt der Schneidkante 12, d.h. ihre Kontur ist vom gewünschten axialen Profil des zu bearbeitenden Werkstückes abhängig. Aus Figur 3 ist ersichtlich, dass die Spanfläche 14 ausgehend von der Schneidkante 12 in Richtung zur Spanablauffläche 16 (sh. Figur 1 oder 2) konkav gekrümmt ist, so dass die in einer jeden zur Längsachse 18 des Schneidwerkzeugs senkrecht stehenden Radialebene liegenden, die Spanfläche 14 berührenden Tangenten t1, t2, t3,... mit der Schnittgeraden 26, entlang der sich die entsprechende Radialebene 24 mit der Bezugsebene 20 schneidet, in radialer Richtung einen sich ändernden Winkel einschliessen. In Figur 3 liegt die geannnte Radialebene in der Zeichnungsebene, während die genannte Bezugsebene 20 zur Zeichnungsebene senkrecht steht. In Figur 3 ist auch die ebenflächige Spanfläche 14′ eines bekannten Kontureinstechschneidwerkzeugs strichliert angedeutet, um die Anhebung der Spanfläche 14 des Schneidwerkzeuges 10 hin zur Bezugsebene 20 zu verdeutlichen, wodurch die dasSchneidwerkzeug 10 in das zu bearbeitende Werkstück hineinzwängenden bzw. die das Schneidwerkzeug 10 aus dem zu bearbeitenden Werkstück herausdrückenden Kräfte in radialer Richtung grösstenteils eliminiert werden. Die Berührungspunkte der Tangenten t1, t2 und t3 an der Spanfläche 14 sind durch die Punkte 12, 28 und 30 bezeichnet. Diesen Punkten entsprechen bei einem an sich bekannten Schneidwerkzeug mit einer ebenflächigen Spanfläche 14' die Punkte 12, 28' und 30'. Die Punkte 28 und 30 können auf der Schneidkante 12 liegen. Aus Figur 3 ist ersichtlich, dass die Punkte 28 und 30 des eine gekrümmte Spanfläche 14 aufweisenden Schneidwerkzeugs 10 von der durch die Abschnitte der Schneidkante 12 mit dem grössten Radius verlaufenden Bezugselement 20 nur relativ kleine Abstände a2 bzw. a3 aufweisen, während die entsprechenden Punkte 28' und 30' relativ grosse Abstände A2 und A3 besitzen. Durch diese grossen Abstände A2 und A3 ergibt sich beim Kontureinstechdrehen eine Überhöhung bzw. Absenkung bestimmter Abschnitte der Schneidkante 12, die in einem Hineinziehen des Schneidwerkzeugs in das zu bearbeitende Werkstück bzw. in ein Herausdrängen des Schneidwerkzeugs aus dem zu bearbeitenden Werkstück resultieren. Diese in radialer Richtung wirksam werdenden Kräfte werden bei dem eine gekrümmte Spanfläche 14 aufweisenden Schneidwerkzeug 10 infolge der Tatsache eliminiert, dass die Abstände a2 und a3 im Vergleich zu den Abständen A2 und A3 verhältnismässig klein sind.

## Ansprüche

1. Schneidwerkzeug zum konturengenauen Aussen- oder Innen-Einstechdrehen eines rotierenden Werkstückes, mit einer Schneidkante (12), deren Kontur in Längsrichtung des Schneidwerkzeuges (10) dem gewünschten axialen Profil des Werkstücks entspricht, und mit einer an die Schneidkante (12) anschliessenden, mit einer durch die Schneidkante (12) verlaufenden Bezugsebene (20) einen Spanwinkel (s) einschliessenden Spanfläche (14), an die sich eine Spanablauffläche (16) anschliesst,
**dadurch gekennzeichnet,**
dass die Spanfläche (14) von der Schneidkante (12) ausgehend zur Spanablauffläche (16) hin konkav gekrümmt ausgebildet ist, so dass die in einer jeden zur Längsachse (18) des Schneidwerkzeugs (10) senkrecht stehenden Radialebene (24) liegenden, die Spanfläche (14) berührenden Tangenten (t1, t2, t3,...) mit der Schnittgeraden (26), entlang der sich die entsprechende Radialebene (24) mit der Bezugsebene (20) schneidet, in radialer Richtung einen sich ändernden Winkel einschliessen.

2. Schneidwerkzeug nach Anspruch 1, **dadurch gekennzeichnet,**
dass sich der Winkel der Tangenten (t1, t2, t3, der Spanfläche (14) relativ zur entsprechenden Schnittgeraden (26) in radialer Richtung der Spanfläche (14) von der Schneidkante (12) zur Spanablauffläche (16) kontinuierlich ändert.

3. Schneidwerkzeug nach Anspruch 2, **dadurch gekennzeichnet,**
dass die Krümmung der Spanfläche (14) zwischen der Schneidkante (12) und der Spanablauffläche (16) mindestens annähernd konstant ist.

FIG.2

FIG.1

FIG.3